# EUROPEAN PATENT APPLICATION

(11) **EP 4 852 154 A1**
(43) Date of publication of application: **09.12.2026**
(21) Application number: 26181709.2
(22) Date of filing: 28.05.2026
(51) Int. Cl.: H01M 10/6563, F04D 29/58, H01M 10/42, H01M 10/66, H01M 10/613, H01M 10/663

(54) **INDIVIDUAL FAN CONTROL DEVICE APPLIED TO ENERGY STORAGE SYSTEM, ENERGY STORAGE SYSTEM USING THE SAME, AND INDIVIDUAL FAN CONTROL METHOD USING THE SAME**

(30) Priority: 02.06.2025 KR 20250072394
(71) Applicant: SAMSUNG SDI CO., LTD., Yongin-si, Gyeonggi-do 17084 (KR)
(72) Inventor: KIM, Jaesoon, 17084 Yongin-si (KR)
(74) Representative: Maiwald GmbH

(57) **Abstract**

Disclosed are an individual fan control device applied to an energy storage system, an energy storage system using the same, and an individual fan control method using the same. The individual fan control device applied to the energy storage system (ESS) includes a communication unit configured to transmit or receive signals to or from one or more container battery management systems (BMSs), a priority determination unit configured to determine a priority of fan operation between different containers based on information received by the communication unit, an operation time setting unit configured to set an operation time of each fan based on the information received by the communication unit for each container having the priority determined therefor, and an allocation signal generation unit configured to generate an allocation signal including priority and operation time information for each container having the priority and the operation time set therefor.

## Description

### FIELD

The present disclosure relates to an energy storage system (ESS), and more particularly, to a control device that is applied to an energy storage system for storing electrical energy and supplying the same if necessary.

### BACKGROUND

Energy storage systems (ESSs) are systems that store electrical energy and supply it at the time of need to supplement the intermittency of renewable energy and stabilize the quality of power, and mainly include batteries, battery control devices, cooling devices, and so on. In particular, the battery modules in the ESSs generate significant heat due to handling of high power, which essentially requires fans for cooling.

Although existing ESSs typically control a plurality of fans simultaneously under the same conditions, they do not take into account the differences in temperature or operating conditions of individual batteries or modules therein, which may lead to excessive consumption of power or deterioration in cooling efficiency. In large-scale ESS projects, the noise from multiple products overlaps rather than the noise from one unit product. Hence, it is important to meet comprehensive noise standards in on-site spaces that affect nearby streets.

In order to meet such noise standards, a conventional technique has existed to lower the noise of one unit product, but it has been difficult to control the effect of the sum of noise caused by multiple products at the same time.

The herein information disclosed in this Background section is for enhancement of understanding of the background of the present disclosure, and therefore, it may contain information that does not constitute related (or prior) art.

### SUMMARY

In accordance with aspects of the present disclosure, there is provided an individual fan control device applied to an energy storage system (ESS), which includes a communication unit configured to transmit or receive signals to or from one or more container battery management systems (BMSs), a priority determination unit configured to determine a priority of fan operation between different containers based on information received by the communication unit, an operation time setting unit configured to set an operation time of each fan based on the information received by the communication unit for each container having the priority determined therefor, and an allocation signal generation unit configured to generate an allocation signal including priority and operation time information for each container having the priority and the operation time set therefor.

The priority determination unit may prioritize a container with a faster container-fan-operation-required request order.

The priority determination unit may prioritize a container with a high coolant inlet temperature.

The priority determination unit may prioritize a container with a high refrigerant pressure.

The operation time setting unit may set the operation time by deriving a time constant required for cooling of coolant through testing in the energy storage system.

The operation time setting unit may set the operation time by setting a forced operation condition including when a refrigerant pressure exceeds 18 bar.

In accordance with another aspect of the present disclosure, there is provided an energy storage system including one or more containers, which includes a master BMS configured to control an entire energy storage system, a container BMS configured to control each of the containers, and an air-conditioning facility including a cooling system and a fan.

The master BMS may include an individual fan control device. The individual fan control device may include a communication unit configured to transmit or receive signals to or from the container BMS, a priority determination unit configured to determine a priority of fan operation between the different containers based on information received by the communication unit, an operation time setting unit configured to set an operation time of the fan based on the information received by the communication unit for each container having the priority determined therefor, and an allocation signal generation unit configured to generate an allocation signal including priority and operation time information for each container having the priority and the operation time set therefor.

The priority determination unit of the energy storage system may prioritize a container with a faster container-fan-operation-required request order.

The priority determination unit of the energy storage system may prioritize a container with a high coolant inlet temperature.

The priority determination unit of the energy storage system may prioritize a container with a high refrigerant pressure.

The operation time setting unit of the energy storage system may set the operation time by deriving a time constant required for cooling of coolant through testing in the energy storage system.

The operation time setting unit of the energy storage system may set the operation time by setting a forced operation condition including when a refrigerant pressure exceeds 18 bar.

The container BMS of the energy storage system may include a fan operation algorithm. The fan operation algorithm may include a process of determining whether a coolant temperature exceeds a preset temperature upper limit, and if not, of determining whether a condenser refrigerant pressure exceeds a preset pressure upper limit.

The container BMS of the energy storage system may operate the fan by setting fan operation requirements including when a refrigerant pressure exceeds 18 bar.

In accordance with a further aspect of the present disclosure, there is provided an individual fan control method in an energy storage system, which includes receiving information from an air-conditioning facility by a container BMS, determining whether fan operation is required with a fan operation algorithm included in the container BMS, determining a priority of fan operation with a priority determination unit of an individual fan control device, setting an operation time of each fan for each container with an operation time setting unit of the individual fan control device, and allocating a fan operation control signal to the container BMS with a communication unit of the individual fan control device.

The priority determination unit in the individual fan control method may prioritize a container with a faster container-fan-operation-required request order.

The priority determination unit in the individual fan control method may prioritize a container with a high coolant inlet temperature.

The priority determination unit in the individual fan control method may prioritize a container with a high refrigerant pressure.

The operation time setting unit in the individual fan control method may set the operation time by deriving a time constant required for cooling of coolant through testing in the energy storage system.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a block diagram illustrating an individual fan control device according to embodiments of the present disclosure;
FIG. 2 is a diagram for explaining an energy storage system including individual fan control devices according to embodiments of the present disclosure;
FIG. 3 is a flowchart for explaining a process of operating an individual fan control device according to embodiments of the present disclosure;
FIG. 4 is a flowchart for explaining a process of determining whether individual fan operation is required according to embodiments of the present disclosure;
FIG. 5 is a configuration diagram illustrating a cooling system included in a general air-conditioning facility according to embodiments of the present disclosure;
FIG. 6 is a flowchart illustrating an individual fan control method according to embodiments of the present disclosure; and
FIG. 7 is a block diagram illustrating a computer system for implementing the method according to the embodiments of the present disclosure.

### DETAILED DESCRIPTION

Exemplary embodiments of the present disclosure will be described herein in detail with reference to the accompanying drawings. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed herein may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure has been proposed to solve the herein-mentioned problems. It is common for battery manufacturers to supply products in the form of containers. Each of the products supplied in this way is able to cause its master battery management system (BMS) to monitor the status of air-conditioning facilities (Chiller/HVAC) and also to control them. In the case of air-conditioning facilities such as chiller/HVAC, noise is mostly caused by operation of fans. In the case of general air-conditioning facilities, fans do not operate constantly, but operate only to dissipate heat from condensers. Accordingly, an object of the present disclosure is to provide a control device capable of reducing overall noise generated on site by operating in a distributed manner rather than simultaneously fans of individual air-conditioning facilities in a situation with multiple containers.

However, the technical problem to be solved by the present disclosure is not limited to the problems described herein, and other problems not mentioned herein, and aspects and features of the present disclosure that would address such problems, will be clearly understood by those skilled in the art from the description of the present disclosure herein.

The present disclosure will be described in detail with reference to the attached drawings.

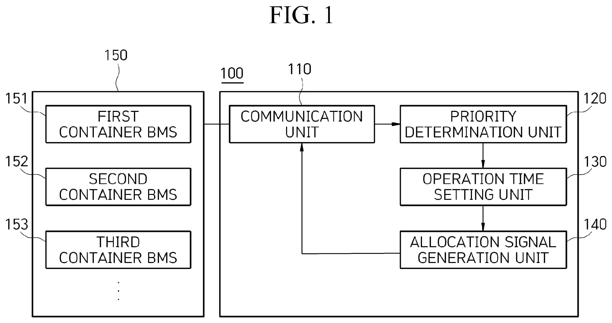

FIG. 1 is a block diagram illustrating an individual fan control device according to embodiments of the present disclosure.

Referring to FIG. 1, the individual fan control device, which is designated by reference numeral 100, may include a communication unit 110, a priority determination unit 120, an operation time setting unit 130, and an allocation signal generation unit 140.

The communication unit 110 serves to transmit or receive signals to and from a container battery management system (BMS) unit 150 that includes a first container BMS 151, a second container BMS 152, a third container BMS 153, and an Nth container BMS. The signals transmitted or received to or from the container BMS unit 150 may be control signals for controlling the respective container BMSs, fan operation information signals, and various other signals required to individually control fans. The communication unit 110 also functions to gather fan operation information signals, which are information on whether fan operation is required for each container. The communication unit 110 sends the gathered information on whether fan operation is required for each container to the priority determination unit 120. In addition, the communication unit 110 receives the allocation signals generated by the allocation signal generation unit 140 to be described later and transmits them to the multiple container BMSs.

The priority determination unit 120 determines a priority of fan operation based on the information on whether fan operation is required for each container. The priority may be determined in consideration of the following.

Firstly, the priority determination unit 120 may determine the priority by considering which container has a fast container-fan-operation-required request order. The container with a fast request order is one whose fan has not been operated for some period of time since fan operation was required, which is more likely to require cooling first. Accordingly, considering which container has a fast container-fan-operation-required request order, it is possible to derive the correct order of cooling.

Secondly, the priority determination unit 120 may determine the priority by considering which container has a high coolant inlet temperature. The coolant inlet temperature is an indicator of whether each individual secondary battery will be cooled smoothly. Specifically, if the coolant inlet temperature is low, the secondary battery may be cooled smoothly, whereas if the coolant inlet temperature is high, the secondary battery may not be cooled smoothly. Accordingly, the container BMSs compensate for the lack of cooling by operating fans to reduce the coolant inlet temperature. Therefore, the priority determination unit 120 may determine which container has the highest coolant inlet temperature and then prioritize fan operation between containers, allowing the containers that need cooling most to be cooled first.

Thirdly, the priority determination unit 120 may determine the priority by considering which container has the highest refrigerant pressure. As with the coolant inlet temperature, the refrigerant pressure is an indicator of whether each individual secondary battery will be cooled smoothly. Specifically, if the refrigerant pressure is low, the secondary battery may be cooled smoothly, whereas if the refrigerant pressure is high, the secondary battery may not be cooled smoothly. Accordingly, the container BMSs compensate for the lack of cooling by operating fans to reduce the refrigerant pressure. Therefore, the priority determination unit 120 may determine which container has the highest coolant inlet temperature and then prioritize fan operation between containers, allowing for accurate priority selection. The selected priority information is transmitted to the operation time setting unit 130.

The operation time setting unit 130 sets an operation time of container fans. The operation time is set from containers with high priority. Setting the operation time is required for the following reasons. As the amount of time the fan in each container is operating increases, the noise caused by the fan increases. On the other hand, if the amount of time the fan is operating decreases, it will not be able to sufficiently cool each individual secondary battery. Hence, the operation time setting unit 130 needs to set the operation time of the fan to be minimized to the extent that the secondary battery is sufficiently cooled. Testing with common fans and energy storage system has shown that it typically takes 30 minutes to reduce coolant temperature by 3 degrees Celsius. Accordingly, the operation time setting unit 130 may set a fan operation time as shown in Equation 1 herein. [Equation 1] 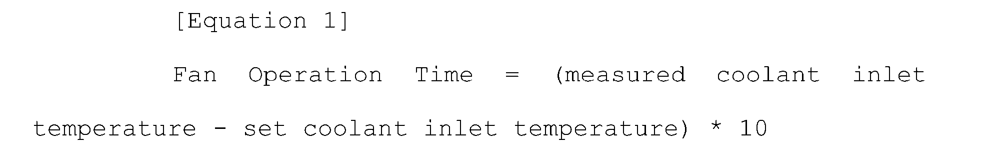 Fan Operation Time = (measured coolant inlet temperature - set coolant inlet temperature) * 10

In Equation 1, the unit of temperature is Celsius, the unit of time factor is minute/Celsius, and the unit of fan operation time is minutes. The values of the time factor and set coolant inlet temperature may vary depending on the energy storage system to which the individual fan control device 100 is applied. Specifically, they are determined based on the fan operation time required to reduce the coolant inlet temperature, and the fan operation time required for the reduction in temperature may be seen by test results using the energy storage system to which the individual fan control device 100 is applied. The operation time setting unit 130 may also set a forced fan operation condition to prepare for situations where cooling is essential. For example, the forced fan operation condition may be a condition such as when the pressure of the refrigerant exceeds 18 bar, and the operation time setting unit may forcibly set the operation time of the associated container to 10 minutes if the condition is satisfied. This will help to prepare for situations where cooling is essential.

The allocation signal generation unit 140 receives the fan operation time set for each container and generates an allocation signal to be allocated to each container. The generated allocation signal is transmitted to the communication unit 110.

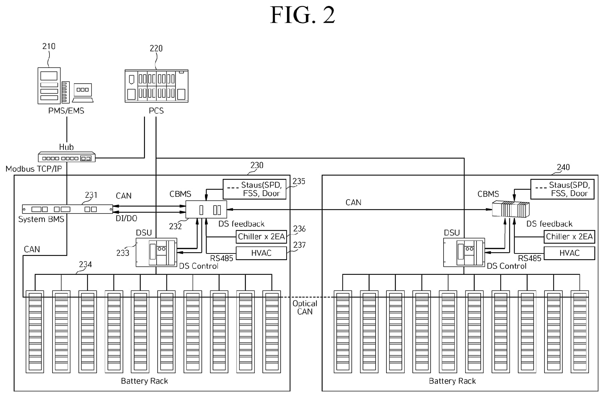

FIG. 2 is a diagram for explaining an energy storage system including individual fan control devices according to embodiments of the present disclosure.

Referring to FIG. 2, the energy storage system including individual fan control devices includes a PMS/EMS 210, a PCS 220, a hub, a first container 230, a second container 240, a system battery management system (BMS) 231, a cooling battery management system (CBMS) 232, a disconnecting switch unit (DSU) 233, a battery rack 234, and a chiller x 2EA 236.

The PMS refers to a power management system that optimizes the flow of power and manages the stable supply of power in the power plant or energy storage system (ESS). The EMS refers to an energy management system that functions to enhance efficiency by comprehensively managing energy production, storage, use, etc.

The PCS 220 is a system that converts direct current (DC) into alternating current (AC) or vice versa, and serves to convert electrical power between the battery and the power grid in the energy storage system (ESS).

The hub is a network communication device that connects multiple devices and serves as a physical connection point for communication.

The system BMS 231 is a system that monitors and controls the status of the entire battery system in real time, and may include an individual fan control device.

The CBMS 232 is a control system that manages a cooling system (HVAC) 237, a circuit breaker status (SPD, FSS, and DOOR) 235, etc. for management of cooling and status.

The DSU 233 is a switch unit that cuts off high current and performs insulation and breaking in the event of an accident.

The battery rack 234 is a device that stores energy in the form of combination of multiple secondary batteries.

In the energy storage system including such a configuration, if it includes an individual fan control device, only as many fans as needed for cooling are operated. Therefore, it is possible to save the energy required for fan operation and minimize the noise caused by fan operation. Tables 1 and 2 show a comparison of synthetic noise values when the basic background noise is 40 dB, the noise level of the air-conditioning facility is 80 dB, and the master BMS does not operate up to three containers simultaneously, for specific noise reduction effects. The synthetic noise is calculated using the formula in Equation 2 herein. In Equation, Lₜₒₜₐₗ is the synthetic noise, n is the number of noise sources, and Lᵢ is the noise value of each noise source. [Equation 2] ${L}_{total} = 10 ⋅ {log}_{10} \left({\sum }_{i = 1}^{n} {10}^{{L}_{i} / 10}\right)$

In other words, the difference in synthetic noise is reduced by 8.24 dB (= 93.01 - 84.77) when the individual fan control device is operated, which has the effect of reducing the total amount of noise in the energy storage system.

**[Table 1]**

| | **Noise Level (dB)** |
|---|---|
| Container #1 | 80 |
| Container #2 | 80 |
| Container #3 | 80 |
| Container #4 | 80 |
| Container #5 | 80 |
| Container #6 | 80 |
| Container #7 | 80 |
| Container #8 | 80 |
| Container #9 | 80 |
| Container #10 | 80 |
| Container #11 | 80 |
| Container #12 | 80 |
| Container #13 | 80 |
| Container #14 | 80 |
| Container #15 | 80 |
| Container #16 | 80 |
| Container #17 | 80 |
| Container #18 | 80 |
| Container #19 | 80 |
| Container #20 | 80 |
| **Total Noise Level (dB)** | **93.01** |
| | |

**[Table 2]**

| | **Noise Level (dB)** |
|---|---|
| Container #1 | 80 |
| Container #2 | 40 |
| Container #3 | 40 |
| Container #4 | 40 |
| Container #5 | 80 |
| Container #6 | 40 |
| Container #7 | 80 |
| Container #8 | 40 |
| Container #9 | 40 |
| Container #10 | 40 |
| Container #11 | 40 |
| Container #12 | 40 |
| Container #13 | 40 |
| Container #14 | 40 |
| Container #15 | 40 |
| Container #16 | 40 |
| Container #17 | 40 |
| Container #18 | 40 |
| Container #19 | 40 |
| Container #20 | 40 |
| **Total Noise Level (dB)** | **84.77** |
| | |

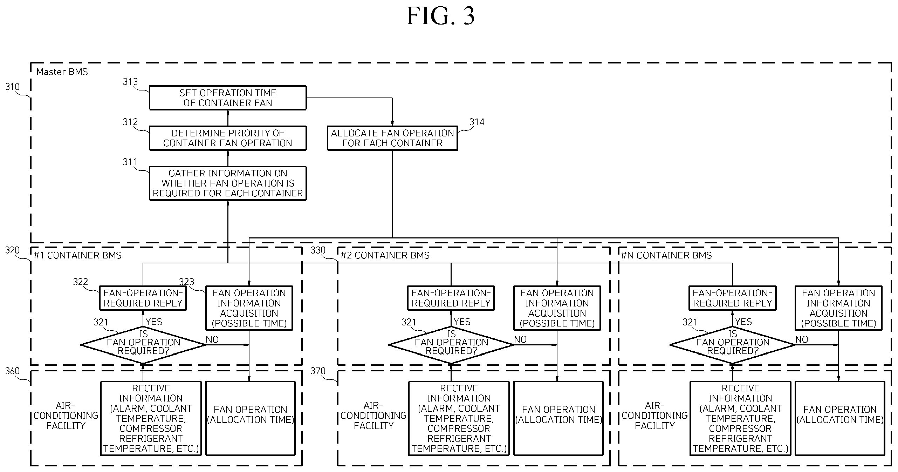

FIG. 3 is a flowchart for explaining a process of operating an individual fan control device according to embodiments of the present disclosure.

Referring to FIG. 3, in the process of operating the individual fan control device, there may be included a master battery management system (BMS) 310, a first container BMS 320, a second container BMS 330, and other additional container BMSs, as well as a first air-conditioning facility 360, a second air-conditioning facility 370, and other additional air-conditioning facilities, which correspond to respective containers.

The master BMS 310 may include an individual fan control device. Thus, the master BMS 310 may use the individual fan control device to perform the following processes. First, an information gathering process 311 is performed to gather information on whether fan operation is required for each container. A priority determination process 312 is performed to determine a priority of container fan operation based on the gathered information. The priority may be determined by considering a fan-operation-required request order, which container has the highest coolant inlet temperature, and which container has the highest refrigerant pressure. An operation time setting process 313 is then performed to set an operation time of container fans. A fan operation allocation process 314 is performed to allocate the set operation time information to each container. Through performance of these processes, individual fans may be controlled respectively, thereby preventing waste of energy used for fan operation and reducing overall noise in the energy storage system. For example, if the individual fan control device generates a control signal for operating the first air-conditioning facility 360 to transmit it to the first container BMS 320 and does not generate a control signal for operating the second air-conditioning facility 370, only the fan in the first air-conditioning facility 360 will be operated. This will consume the energy required to operate just one fan, and also reduce overall noise.

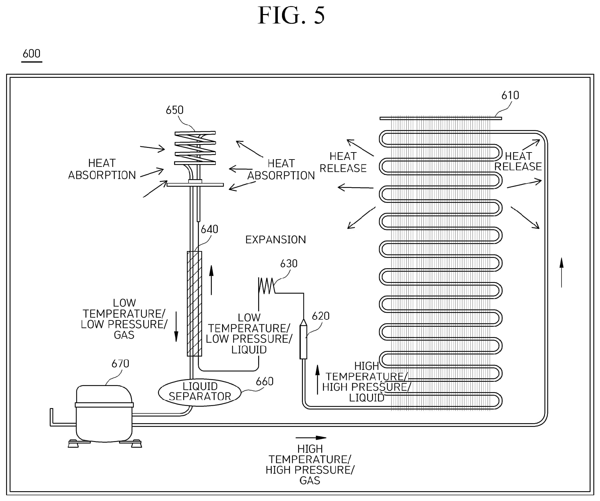

The container BMS may include a first container BMS 320, a second container BMS 330, and other additional container BMSs. In the container BMS, there are included a fan-operation-required reply step 322 of replying to the master BMS with information about the need for fan operation, and a fan operation information acquisition step 323 of obtaining information about a possible time for fan operation and each individual container. In addition, information (including coolant temperature, compressor refrigerant temperature, alarm, and other information related to the air-conditioning facilities) is received from the air-conditioning facilities. The container BMS includes a fan operation algorithm 321 for determining whether fan operation is required. The flowchart of the specific algorithm will be described herein with reference to FIG. 5. In addition to the determination by the algorithm, the fans may be operated if meeting fan operation requirements that require fan operation. Specifically, the fan operation requirements may be conditions, such as when the coolant temperature exceeds a temperature that adds 3 degrees Celsius to the set temperature or when the refrigerant pressure exceeds 18 bar. The pressure of the refrigerant may, however, vary depending on conditions such as outside temperature and humidity, so various conditions adoptable by those skilled in the art may thus be applied thereto. In summary, the container BMS replies to the associated container with information and uses the fan operation algorithm 321 to reply to the master BMS 310 as to whether fan operation is required. When the control signal including the fan operation time is allocated by the master BMS, it is possible to operate the fans based on the fan operation time by obtaining the control signal or to operate the fans according to the fan operation requirements.

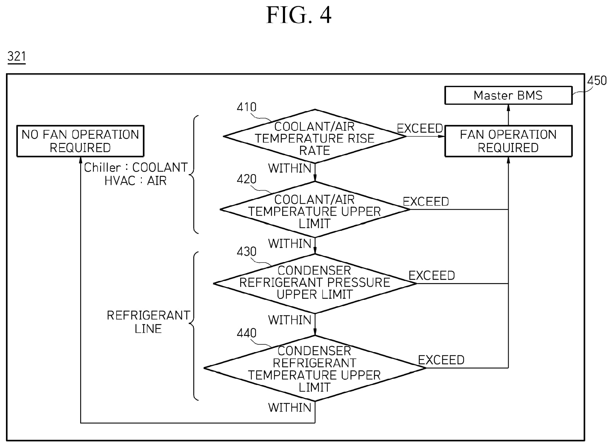

FIG. 4 is a flowchart for explaining the fan operation algorithm 321 for determining whether individual fan operation is required according to the embodiments of the present disclosure.

Referring to FIG. 4, the fan operation algorithm 321 may include the steps of whether a coolant/air temperature rise rate is exceeded (410), whether a coolant/air temperature upper limit is exceeded (420), whether a condenser refrigerant pressure upper limit is exceeded (430), and whether a condenser refrigerant temperature upper limit is exceeded (440).

The steps of whether a coolant/air temperature rise rate is exceeded (410) and whether a coolant/air temperature upper limit is exceeded (420) determine whether the temperatures of coolant (in the chiller) and air (in the HVAC) rise. In order to smoothly operate a cooling system, the temperatures of coolant and air need to be maintained appropriately, and the fans must be operated for this purpose. Therefore, the fan operation algorithm 321 includes the steps of determining whether the coolant/air temperature rise rate exceeds a preset temperature rise rate and whether the coolant/air temperature upper limit exceeds a preset temperature upper limit.

The steps of whether a condenser refrigerant pressure upper limit is exceeded (430) and whether a condenser refrigerant temperature upper limit is exceeded (440) are determined based on the condenser refrigerant included in a refrigerant line. As described herein, in order to smoothly operate the cooling system, the temperature and pressure of the condenser refrigerant need to be maintained appropriately, and the fans must be operated for this purpose. Therefore, the fan operation algorithm 321 includes the steps of determining whether the condenser refrigerant pressure upper limit exceeds a preset upper limit and whether the condenser refrigerant temperature upper limit exceeds a preset temperature upper limit.

In summary, the fan operation algorithm 321 transmits fan-operation-required information to the master BMS 450 if the coolant/air temperature rise rate is exceeded in step 410. On the other hand, if it is not exceeded in step 410, the fan operation algorithm 321 determines whether the coolant/air temperature upper limit is exceeded (420). The fan operation algorithm 321 determines whether the coolant/air temperature upper limit is exceeded (420) if the coolant/air temperature rise rate is within the preset standard, and then transmits the fan-operation-required information to the master BMS 450 if it is exceeded. On the other hand, if it is not exceeded, the fan operation algorithm 321 determines whether the condenser refrigerant pressure upper limit is exceeded (430). The fan operation algorithm 321 determines whether the condenser refrigerant pressure upper limit is exceeded (430) if the coolant/air temperature upper limit is within the preset standard, and then transmits the fan-operation-required information to the master BMS 450 if it is exceeded. On the other hand, if it is not exceeded, the fan operation algorithm 321 determines whether the condenser refrigerant temperature upper limit is exceeded. The fan operation algorithm 321 determines whether the condenser refrigerant temperature upper limit is exceeded

(440) if the condenser refrigerant pressure upper limit is within the preset standard, and then transmits the fan-operation-required information to the master BMS 450 if it is exceeded. On the other hand, if it is not exceeded, the fan operation algorithm 321 concludes that fan operation is not required and terminates.

FIG. 5 is a configuration diagram illustrating a cooling system included in a general air-conditioning facility according to embodiments of the present disclosure.

Referring to FIG. 5, the cooling system may include a wire condenser 610, a dryer 620, a capillary tube 630, an evaporator 640, a suction line heat exchanger (SLHX) 650, a liquid separator 660, and a compressor 670.

The wire condenser 610 functions to cool the high-temperature and high-pressure gaseous refrigerant coming from the compressor and condense it into a liquid state. During this process, the refrigerant changes from gas to liquid by releasing heat to the surroundings, and the refrigerant condensed in this way is then transferred to the next stage, the dryer.

The dryer 620 functions to remove moisture and impurities from the liquid refrigerant introduced from the wire condenser. The dryer plays an important role in maintaining the stability and life of the cooling system, as containing moisture or foreign substances in the refrigerant may cause issues such as freezing or corrosion inside the system.

The capillary tube 630 functions to expand the high-temperature and high-pressure liquid refrigerant, which has passed through the dryer, into a low-temperature and low-pressure state via a narrow tube. It helps the refrigerant to vaporize well in the subsequent evaporator by inducing a pressure drop.

The evaporator 640 is responsible for the process in which the low-temperature and low-pressure liquid refrigerant that has passed through the capillary tube vaporizes by absorbing heat. In this case, the refrigerant absorbs the heat around it to make the air cool, resulting in a cooling effect. During this process, the refrigerant returns to a gaseous state and moves on to the next stage.

The SLHX 650 functions to exchange heat between the low-temperature and low-pressure gaseous refrigerant coming from the evaporator and the low-temperature and low-pressure liquid refrigerant just before passing through the capillary tube. This contributes to making the state of the refrigerant more stable and enhancing cooling efficiency.

The liquid separator 660 functions to separate the liquid refrigerant, which is not completely vaporized in the evaporator and remains, from the gaseous refrigerant. Since direct introduction of the liquid refrigerant into the compressor may cause damage to the device, only the gas is passed therethrough and the liquid is returned to the circuit for reuse.

The compressor 670 functions to suck the low-temperature and low-pressure gaseous refrigerant and compress it into high-temperature and high-pressure gas, and becomes the starting point of refrigerant circulation. It compresses the refrigerant to make it capable of transporting heat.

In other words, the cooling system is used to cool the secondary battery by utilizing the phase change of the refrigerant in light of the fact that the phase change of the refrigerant is an endothermic or exothermic reaction, and fans are used to dissipate the heat generated by the condenser. The fans need to be operated situationally to maintain normal operation of the cooling system, depending on the degree of heat generated by the condenser.

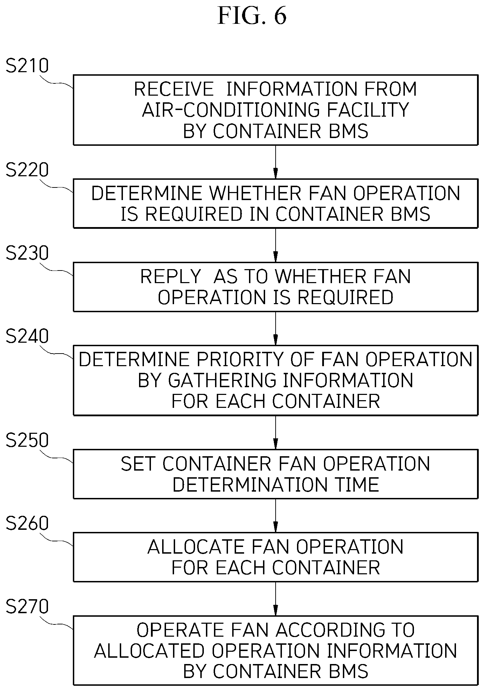

FIG. 6 is a flowchart illustrating an individual fan control method according to embodiments of the present disclosure.

Referring to FIG. 6, the individual fan control method may include an air-conditioning facility information reply step S210, a fan-operation-required determination step S220, a fan-operation-required reply step S230, a container-specific priority determination step S240, a fan operation time setting step S250, a fan operation allocation step S260, and a fan operation step S270.

The air-conditioning facility information reply step S210 is a step of receiving information from an air-conditioning facility by a container BMS. The received information includes coolant temperature, compressor refrigerant temperature, alarm, and other information related to the air-conditioning facility.

The fan-operation-required determination step S220 uses a fan operation algorithm included in the container BMS to determine whether fan operation is required based on the coolant temperature, compressor refrigerant temperature, alarm, and other information related to the air-conditioning facility, which are received by the container BMS. As described herein, the specific algorithm is as follows. The fan operation algorithm transmits fan-operation-required information to the master BMS if the coolant/air temperature rise rate is exceeded. On the other hand, if it is not exceeded, the fan operation algorithm determines whether the coolant/air temperature upper limit is exceeded. The fan operation algorithm determines whether the coolant/air temperature upper limit is exceeded if the coolant/air temperature rise rate is within the preset standard, and then transmits the fan-operation-required information to the master BMS if it is exceeded. On the other hand, if it is not exceeded, the fan operation algorithm determines whether the condenser refrigerant pressure upper limit is exceeded. The fan operation algorithm determines whether the condenser refrigerant pressure upper limit is exceeded if the coolant/air temperature upper limit is within the preset standard, and then transmits the fan-operation-required information to the master BMS if it is exceeded. On the other hand, if it is not exceeded, the fan operation algorithm determines whether the condenser refrigerant temperature upper limit is exceeded. The fan operation algorithm determines whether the condenser refrigerant temperature upper limit is exceeded if the condenser refrigerant pressure upper limit is within the preset standard, and then transmits the fan-operation-required information to the master BMS if it is exceeded. On the other hand, if it is not exceeded, the fan operation algorithm concludes that fan operation is not required and terminates. In other words, the fan-operation-required determination step S220 is a step of using the fan operation algorithm of the container BMS to determine whether fan operation is required.

The fan-operation-required reply step S230 is a step of replying to the master BMS as to whether fan operation is required by the container BMS.

The container-specific priority determination step S240 determines a priority of fan operation by gathering information on whether fan operation is required for each container by the master BMS. The specific process is carried out by the individual fan control device described herein. The container-specific priority determination step S240 is a step of using the communication unit of the individual fan control device to gather information on whether fan operation is required, and of using the priority determination unit to determine the priority based on the gathered information.

The fan operation time setting step S250 is a step of using the operation time setting unit of the individual fan control device to set a fan operation time for each container.

The fan operation allocation step S260 is a step of using the communication unit of the individual fan control device so that the master BMS allocates a fan operation control signal to the container BMS.

The fan operation step S270 is a step of transmitting the control signal to the air-conditioning facility to operate an associated fan by the container BMS.

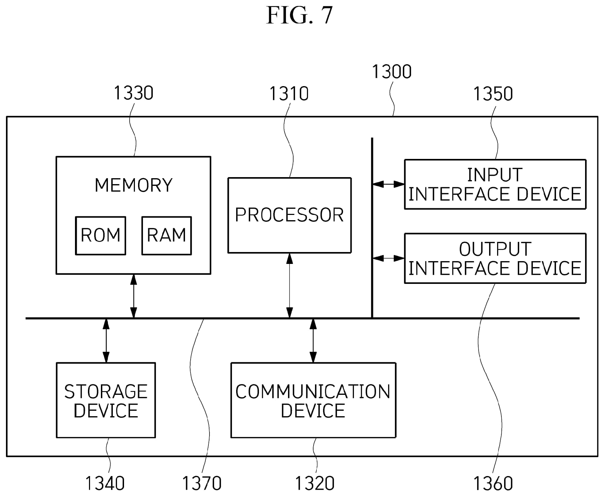

FIG. 7 is a block diagram illustrating a computer system for implementing the method according to the embodiments of the present disclosure.

Referring to FIG. 7, the computer system, which is designated by reference numeral 1300, may include at least one of a processor 1310, a memory 1330, an input interface device 1350, an output interface device 1360, and a storage device 1340, which communicate with each other via a bus 1370. The computer system 1300 may also include a communication device 1320 coupled to a network. The processor 1310 may be a central processing unit (CPU) or a semiconductor device that executes instructions stored in the memory 1330 or storage device 1340. The memory 1330 and the storage device 1340 may include various types of volatile or non-volatile storage media. For example, the memory may include read only memory (ROM) and random access memory (RAM). In the embodiments of the present disclosure, the memory may be located inside or outside the processor, and the memory may be connected to the processor through various known means. The memory may include various types of volatile or non-volatile storage media. For example, the memory may include read only memory (ROM) or random access memory (RAM).

Accordingly, the embodiments of the present disclosure may be embodied by computer-implemented methods or by non-transitory computer-readable media having computer-executable instructions stored thereon. In embodiments, computer-readable instructions may perform, when executed by a processor, a method according to at least one aspect of the present disclosure.

The communication device 1320 may transmit or receive wired signals or wireless signals.

In addition, the method according to the embodiments of the present disclosure may be implemented in the form of program instructions that can be executed through various computer means and recorded on computer-readable media.

The computer-readable media may include program instructions, data files, data structures, etc., alone or in combination. The program instructions recorded on the computer-readable media may be specially designed and configured for embodiments of the present disclosure, or may be known and usable by those skilled in the art of computer software. The computer-readable recording media may include a hardware device configured to store and perform program instructions. Examples of the computer-readable recording media may include magnetic media such as hard disk, floppy disk, and magnetic tape, optical media such as CD-ROM and DVD, magneto-optical media such as floptical disk, ROM, RAM, and flash memory, etc. The program instructions may include not only machine language code such as that created by compilers, but also high-level language code that can be executed by computers through interpreters or the like.

Although the specific embodiments have been described with reference to the drawings, the present disclosure is not limited thereto.

Hereinafter, materials which may be used in a secondary battery according to embodiments of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0. 90≤a≤1.8, 0≤b≤0.5, 0≤c≤0.05) ; LiₐMn_{2-b}X_{b}O_{4-c}D_{c} (0.90≤a≤1.8, 0≤b≤0.5, 0≤c≤0.05) ; LiₐNi_{1-b-c}Co_{b}X_{c}O_{2-α}D_{α} (0. 90≤a≤1.8, 0≤b≤0.5, 0≤c≤0.5, 0<α<2) ; LiₐNi_{1-b-c}Mn_{b}X_{c}O_{2-α}D_{α} (0. 90≤a≤1.8, 0≤b≤0.5, 0≤c≤0.5, 0<α<2) ; LiₐNi_{b}Co_{c}L¹_{d}GₑO₂ (0.90≤a≤1.8, 0≤b≤0.9, 0≤c≤0.5, 0≤d≤0.5, 0≤e≤0.1) ; LiₐNiG_{b}O₂ (0.90≤a≤1.8, 0.001≤b≤0.1) ; LiₐCoG_{b}O₂ (0.90≤a≤1.8, 0.001≤b≤0.1) ; LiₐMn_{1-b}G_{b}O₂ (0.90≤a≤1.8, 0.001≤b≤0.1) ; LiₐMn₂G_{b}O₄ (0. 90≤a≤1.8, 0.001≤b≤0.1) ; LiₐMn_{1-g}G_{g}PO₄ (0.90≤a≤1.8, 0≤g≤0.5) ; Li_{(3-f)}Fe₂(PO₄)₃(0≤f≤2) ; and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present disclosure may not be limited thereto.

A negative electrode active material may include a material capable of reversibly Intercalation/deintercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x≤2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99.5 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

As is apparent from the herein description, according to the present disclosure, since the timing of fan operation is not controlled in a place where multiple containers and air-conditioning facilities are gathered together such as the energy storage system, the sum of noise generated by multiple devices may cause a negative impact on nearby areas. In order to solve this problem, it is possible to operate the fans of the multiple air-conditioning facilities by dividing the time thereof and to thereby reduce the total amount of overall noise.

Additionally, by setting a minimum standard required for individual fan operation, it is possible to reduce the energy usage used for fan operation.

However, aspects and features of the present disclosure are not limited to those described herein, and other aspects and features not mentioned will be clearly understood by a person skilled in the art from the detailed description, described herein.

Although the present disclosure has been described herein in connection with the limited embodiments and drawings, the present disclosure is not limited to the embodiments.

## Claims

1. An individual fan control device (100) that is applied to an energy storage system, ESS, the individual fan control device (100) comprising:
a communication unit (110) configured to transmit or receive signals to or from one or more container (230, 240) battery management systems, BMSs;
a priority determination unit (120) configured to determine a priority of fan operation between different containers based on information received by the communication unit (110);
an operation time setting unit (130) configured to set an operation time of each fan based on the information received by the communication unit (110) for each container (230, 240) having the priority determined therefor; and
an allocation signal generation unit (140) configured to generate an allocation signal comprising priority and operation time information for each container (230, 240) having the priority and the operation time set therefor.

2. The individual fan control device (100) as claimed in claim 1, wherein the priority determination unit (120) prioritizes a container (230, 240) with a faster container-fan-operation-required request order.

3. The individual fan control device (100) as claimed in claim 1, wherein the priority determination unit (120) prioritizes a container (230, 240) with a high coolant inlet temperature.

4. The individual fan control device (100) as claimed in claim 1, wherein the priority determination unit (120) prioritizes a container (230, 240) with a high refrigerant pressure.

5. The individual fan control device (100) as claimed in any one of the preceding claims, wherein the operation time setting unit (130) sets the operation time by deriving a time constant required for cooling of coolant through testing in the energy storage system.

6. The individual fan control device (100) as claimed in any one of the preceding claims, wherein the operation time setting unit (130) sets the operation time by setting a forced operation condition comprising when a refrigerant pressure exceeds 18 bar.

7. An energy storage system that comprises one or more containers (230, 240), the energy storage system comprising:
a master BMS (310) configured to control an entire energy storage system;
a container BMS (320, 330) configured to control each of the containers (230, 240); and
an air-conditioning facility (360, 370) comprising a cooling system and a fan.

8. The energy storage system as claimed in claim 7,
wherein:
the master BMS (310) comprises an individual fan control device (100), and
the individual fan control device (100) comprises:
a communication unit (110) configured to transmit or receive signals to or from the container BMS (320, 330);
a priority determination unit (120) configured to determine a priority of fan operation between the different containers based on information received by the communication unit (110);
an operation time setting unit (130) configured to set an operation time of the fan based on the information received by the communication unit (110) for each container (230, 240) having the priority determined therefor; and
an allocation signal generation unit (140) configured to generate an allocation signal comprising priority and operation time information for each container (230, 240) having the priority and the operation time set therefor.

9. The energy storage system as claimed in claim 8, wherein the priority determination unit prioritizes a container with a faster container-fan-operation-required request order.

10. The energy storage system as claimed in claim 8, wherein the priority determination unit prioritizes a container with a high coolant inlet temperature.

11. The energy storage system as claimed in claim 8, wherein the priority determination unit prioritizes a container with a high refrigerant pressure.

12. The energy storage system as claimed in any one of the claims 8 to 11, wherein the operation time setting unit sets the operation time by deriving a time constant required for cooling of coolant through testing in the energy storage system.

13. The energy storage system as claimed in any one of the claims 7 to 12, wherein:
the container BMS (320, 330) comprises a fan operation algorithm (321); and
the fan operation algorithm (321) comprises a process of determining whether a coolant temperature exceeds a preset temperature upper limit, and if not, of determining whether a condenser refrigerant pressure exceeds a preset pressure upper limit.

14. The energy storage system as claimed in any one of the claims 7 to 13, wherein the container BMS (320, 330) operates the fan by setting fan operation requirements comprising when a refrigerant pressure exceeds 18 bar.

15. An individual fan control method in an energy storage system, comprising:
receiving information from an air-conditioning facility (360, 370) by a container BMS (320, 330);
determining whether fan operation is required with a fan operation algorithm (321) comprised in the container BMS (320, 330);
determining a priority of fan operation with a priority determination unit (120) of an individual fan control device (100);
setting an operation time of each fan for each container (230, 240) with an operation time setting unit (130) of the individual fan control device (100); and
allocating a fan operation control signal to the container BMS (320, 330) with a communication unit (110) of the individual fan control device (100).
